(19) Europäisches Patentamt / European Patent Office / Office européen des brevets

(11) **EP 3 998 230 B1**

(12) **EUROPEAN PATENT SPECIFICATION**

(45) Date of publication and mention
of the grant of the patent:
**20.05.2026 Bulletin 2026/21**

(21) Application number: **20839964.2**

(22) Date of filing: **05.06.2020**

(51) International Patent Classification (IPC):
**C01B 33/035** (2006.01)

(52) Cooperative Patent Classification (CPC):
**C01B 33/035**

(86) International application number:
**PCT/JP2020/022307**

(87) International publication number:
**WO 2021/010051 (21.01.2021 Gazette 2021/03)**

(54) **PRODUCTION METHOD FOR POLYCRYSTALLINE SILICON**

VERFAHREN ZUR HERSTELLUNG VON POLYKRISTALLINEM SILIZIUM

MÉTHODE DE FABRICATION DE SILICIUM POLYCRISTALLIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2019 JP 2019130189**

(43) Date of publication of application:
**18.05.2022 Bulletin 2022/20**

(73) Proprietor: **Tokuyama Corporation
Shunan-shi, Yamaguchi 745-8648 (JP)**

(72) Inventor: **SAKAI, Junya
Shunan-shi, Yamaguchi 745-8648 (JP)**

(74) Representative: **Bittner, Thomas L.
Boehmert & Boehmert
Anwaltspartnerschaft mbB
Pettenkoferstrasse 22
80336 München (DE)**

(56) References cited:
WO-A1-2019/110091   CN-A- 101 870 471
CN-A- 102 259 861   CN-B- 102 354 336
JP-A- 2011 037 699   JP-A- 2011 231 005
JP-A- 2014 148 464   US-A1- 2011 014 468

# EP 3 998 230 B1

## Description

The present invention relates to a method for producing polycrystalline silicon.

Background

A Siemens method is known as a method of industrially producing polycrystalline silicon that is used as a raw material of semiconductors or of wafers for solar power generation. In the Siemens method, raw material gas containing hydrogen and trichlorosilane is supplied into a bell-shaped (a bell jar-type) reactor. Core wires for deposition of polycrystalline silicon (silicon core wires) are provided inside the reactor so as to stand. Polycrystalline silicon is deposited and grown on a surface of each of the silicon core wires by heating the silicon core wires, so that polycrystalline silicon rods are obtained.

The reactor has recently been made larger so that productivity is enhanced, and more polycrystalline silicon rods are formed in the reactor. An increase in number of silicon core wires in the reactor makes it difficult for a single power source circuit to control production of all the polycrystalline silicon rods in the reactor. A method has therefore been proposed in which the silicon core wires are divided into groups and the groups are provided with respective power source circuits, which are used to control temperatures of, electric currents of, and voltages of the silicon core wires in the reactor.

For example, Patent Literature 1 discloses a control method carried out in a reactor in which 4 pairs, 8 pairs, and 12 pairs of silicon core wires are arranged on concentric circles sequentially from the inner side. According to the invention disclosed in Patent Literature 1, the 4 pairs on the innermost circle are controlled by a first voltage control device. The 8 pairs on the intermediate circle are controlled by a second voltage control device. Out of the 12 pairs on the outermost circle, 4 pairs are controlled by a third voltage control device, and the remaining 8 pairs are controlled by a fourth voltage control device.

Furthermore, Patent Literature 2 discloses a control method carried out in a reactor in which 6 pairs, 12 pairs, and 18 pairs of silicon core wires are arranged on concentric circles sequentially from the inner side. According to the invention disclosed in Patent Literature 2, the silicon core wires arranged on each of the concentric circles are divided first into groups each including 3 pairs of silicon core wires. Then, 12 groups obtained by thus dividing the silicon core wires are divided into a group of 4 pairs-4 pairs-4 pairs or 2 pairs-2 pairs-4 pairs-4 pairs so as to be subjected to voltage control.

Moreover, Patent Literature 3 discloses a two-step method for producing polycrystalline silicon. In the first step, the surface temperature of a silicon seed rod is controlled by adjusting the current and maintaining a specific supply of chlorosilanes until the rod's center temperature reaches a level below silicon's melting point. In the second step, a predetermined current value is set based on the rod's diameter, and the supply of raw material gas is reduced to stabilize the surface and center temperatures within specified ranges.

In addition, Patent Literature 4 discloses a high-efficiency large polycrystalline silicon reducing furnace which comprises chassis and the bell-type furnace tube and is provided with many counter electrodes. The electrodes are distributed in multiple layers, with the number of electrodes calculated by $2n(n+1)2n(n+1)2n(n+1)$, where $n{\geq}4$.

Further, Patent Literature 5 discloses determining a surface temperature of a silicon rod in a chemical gas phase deposition reactor. A measuring device A determines the surface temperature on the silicon rod, and a measuring device B determines the diameter of the silicon rod. The size and the position of the measurement area is adapted, depending on the diameter or diameters determined.

Furthermore, Patent Literature 6 discloses a method for estimation of radiation heat loss of a polysilicon CVD (chemical vapor deposition) reactor. The key technical parameter of radiation heat exchange, i.e. angle factor, is obtained in a Monte Carlo method, and then the radiation heat loss in the CVD reactor can be calculated.

Citation List

[Patent Literature 1]
Chinese Utility Model Publication No. 202358923 Publication (Registration Date: August 1, 2012)
[Patent Literature 2]
Chinese Utility Model Publication No. 202358926 Publication (Registration Date: August 1, 2012)
[Patent Literature 3
United States Publication No. US 2011 / 0 014 468 A1 (Publication Date: January 20, 2011)
[Patent Literature 4]
Chinese Publication No. CN 101870471 A (Publication Date: October 27, 2010)
[Patent Literature 5]
International Publication No. WO 2019 / 110 091 A1 (Publication Date: June 13, 2019)

[Patent Literature 6]
Chinese Publication No. CN 102354336 A (Publication Date: February 15, 2012)

Summary

Technical Problem

In such a conventional technique as described earlier, voltage control is carried out such that electric currents having an identical amount are passed through all the silicon core wires. However, the inventor of the present invention found that production of the polycrystalline silicon rods in accordance with the Siemens method has such a problem as below. Specifically, in the Siemens method, heat loss caused by heat radiation from the polycrystalline silicon rods to a reactor wall occurs during growth of the silicon core wires and formation of the polycrystalline silicon rods. In rods arranged on a plurality of concentric circles, greater heat loss occurs in a rod arranged on a circumference that is closer to the reactor wall. In other words, the rod arranged on the circumference that is closer to the reactor wall has a lower surface temperature during the deposition of polycrystalline silicon. Therefore, in a case where control is carried out such that the same electric current is applied to all the silicon core wires, the rod arranged on the circumference that is closer to the reactor wall is grown at a lower rate than a rod arranged inside that circumference. Such a difference in growth rate causes a variation in thickness of the polycrystalline silicon rods to be formed in the reactor.

An object of an aspect of the present invention is to reduce a variation in thickness of polycrystalline silicon rods to be formed in a reactor.

Solution to Problem

In order to attain the above object, a method for producing a polycrystalline silicon rod in accordance with an aspect of the present invention, the method involving growing polycrystalline silicon by passing electric currents through silicon core wires in a bell jar in which the silicon core wires are arranged on a plurality of concentric circles, is configured such that values of the electric currents to be passed through the silicon core wires are controlled so that an electric current to be passed through a silicon core wire arranged on a first concentric circle of the plurality of concentric circles has a greater value than an electric current to be passed through a silicon core wire arranged on a second concentric circle of the plurality of concentric circles, the second concentric circle being located inward of the first concentric circle.

Advantageous Effects of Invention

An aspect of the present invention makes it possible to reduce a variation in thickness of polycrystalline silicon rods to be formed in a reactor.

Brief Description of Drawings

Fig. 1   is a view schematically illustrating a structure of a reactor for production of a polycrystalline silicon rod in accordance with Embodiment 1 of the present invention.
Fig. 2   is a view schematically illustrating an arrangement of silicon core wires disposed inside the reactor in accordance with Embodiment 1 of the present invention.

Description of Embodiments

Embodiment 1

(Apparatus for producing polycrystalline silicon)

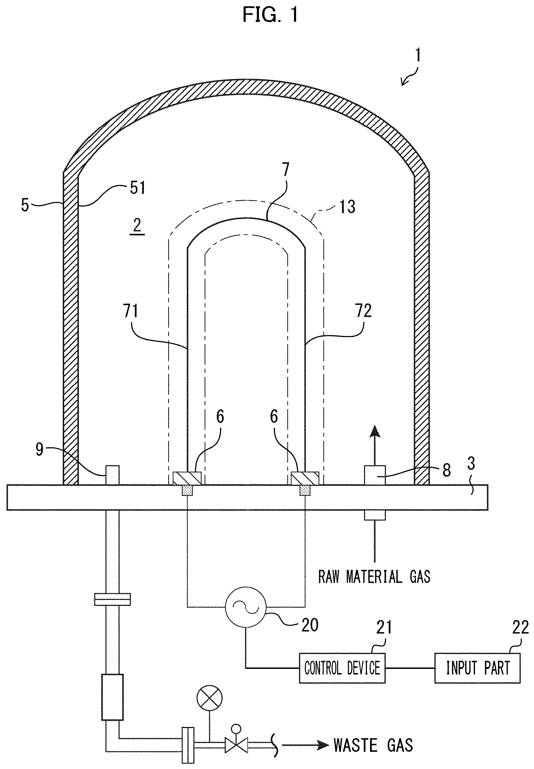

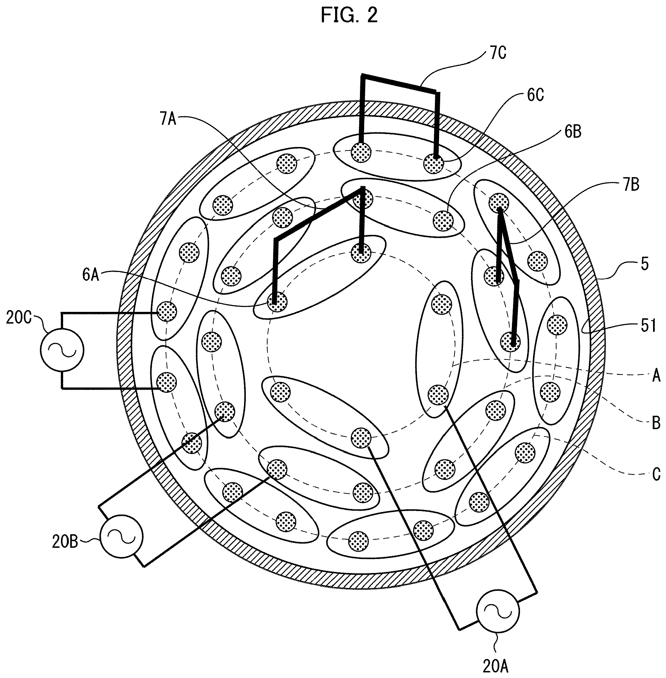

An embodiment of the present invention will be described below in detail. A production apparatus used in a method for producing a polycrystalline silicon rod in accordance with an embodiment of the present invention will be described first with reference to Figs. 1 and 2.

Fig. 1 is a view schematically illustrating a structure of a reactor 1 that is used to produce a polycrystalline silicon rod. The reactor 1 includes a bottom plate 3, a bell jar 5, electrodes 6, a silicon core wire 7, a raw material gas supply port 8, a waste gas pipe 9, a power source 20, a control device 21, and an input part 22. The bell jar 5 is mounted on the bottom plate 3 by bolting or the like so as to be openable and closable. Furthermore, the bell jar 5 is a structure that forms a reaction chamber 2 as its internal space, and includes an inner wall 51 that is an inner side wall surface of the bell jar 5. The silicon core wire 7 includes two columnar parts 71 and 72.

In the reaction chamber 2 inside the bell jar 5, the silicon core wire 7 is provided so as to stand via the electrodes 6 that are disposed on the bottom plate 3. The electrodes 6 can be made of carbon, stainless steel (SUS), Cu, or the like.

The temperature inside the reaction chamber 2 becomes high. The bell jar 5 is therefore preferably made of a material that is excellent in heat resistance and in lightweight property, that does not adversely affect a reaction, and that allows the bell jar 5 to be easily cooled. From this viewpoint, the bell jar 5 is preferably made of SUS. The bell jar 5 can have an outer surface that is covered by a cooling jacket.

Furthermore, the bottom plate 3 is provided with the raw material gas supply port 8 through which raw material gas is to be supplied into the reaction chamber 2. Furthermore, the bottom plate 3 is provided with the waste gas pipe 9 through which waste gas is to be discharged.

Fig. 2 is a view illustrating an arrangement of silicon core wires 7 (silicon core wires 7A to 7C) disposed inside the reactor 1. In Embodiment 1, the silicon core wires 7 are arranged on a plurality of concentric circles that share a center of the bottom plate 3 and that have different radii (see Fig. 2). Fig. 2 illustrates a case where the number of concentric circles is 3. A circle A that is the innermost concentric circle is provided with 3 pairs of electrodes 6A, and each silicon core wire 7A is provided so as to stand while being connected to a corresponding pair of electrodes 6A. The 3 pairs of electrodes are connected in series, and both ends of a wire by which those pairs of electrodes are connected in series are connected to a power source 20A. This makes it possible to pass an electric current from the power source 20A to the silicon core wire 7A. A circle B that is located outward of the circle A is provided with 6 pairs of electrodes, and a circle C that is located outermost is provided with 9 pairs of electrodes. The silicon core wire 7B and the silicon core wire 7C are provided so as to stand on the circles B and C, respectively, as in the case of the circle A. The 6 pairs of electrodes of the circle B are connected to a power source 20B, and the 9 pairs of electrodes of the circle C are connected to a power source 20C.

Fig. 2 illustrates a case where the number of concentric circles on which the silicon core wires 7 are arranged is 3. Note, however, that the number of the concentric circles is not limited to 3. The number of the concentric circles is normally 2 to 10, preferably 3 to 8, and more preferably 3 to 5. Furthermore, the number of electrodes arranged on each of the circles is not limited to the number illustrated in Fig. 2. However, in view of a take-out of a rod after the end of the deposition, a number $M_k$ of electrodes arranged on a circle k is preferably an integer that satisfies Inequality (1) below where $R_{max}$ represents a diameter of a polycrystalline silicon rod 13 at the end of the deposition and $r_k$ represents a radius of the circle k.

$$M_k \leqq 1.5 \times \pi \times r_k / R_{max} \qquad (1)$$

(Method for producing polycrystalline silicon)

In Embodiment 1, a Siemens method is used to produce polycrystalline silicon. A polycrystalline silicon deposition process carried out in the Siemens method will schematically be described below with reference to Fig. 1. Electric currents that are supplied from respective power sources 20 (power sources 20A to 20C) are passed through the silicon core wires 7 via the electrodes 6 so that the silicon core wires 7 are heated to a temperature equal to or higher than the deposition temperature of polycrystalline silicon. In this case, the deposition temperature of polycrystalline silicon is not particularly limited. Note, however, that the deposition temperature is preferably maintained at a temperature of 1000°C to 1100°C so that polycrystalline silicon is quickly deposited on the silicon core wires 7.

The raw material gas is supplied through the raw material gas supply port 8 into the reactor 1. This allows the raw material gas to be supplied to the silicon core wires 7 through which the electric currents are passed and that are heated. Examples of the raw material gas include a mixed gas that contains gas of a silane compound and hydrogen. The polycrystalline silicon rod 13 is formed by a reaction of this raw material gas, that is, a reduction reaction of the silane compound.

Examples of the gas of the silane compound include gases of a silane compound(s) such as monosilane, trichlorosilane, silicon tetrachloride, monochlorosilane, and/or dichlorosilane. In general, a trichlorosilane gas is suitably used. Trichlorosilane that is used in the polycrystalline silicon deposition process preferably has a purity of not less than 99.9% in order to obtain highly pure polycrystalline silicon.

In the polycrystalline silicon deposition process, a large part of hydrogen contained in the raw material gas can be supplemented by hydrogen gas that is refined from waste gas and circulated, whereas a hydrogen shortage can be compensated for with hydrogen obtained by a known production method. For example, such hydrogen can be produced by electrolysis of water. Hydrogen that is used in the polycrystalline silicon deposition process preferably has a purity of not less than 99.99% by volume in order to obtain highly pure polycrystalline silicon. Use of such highly pure trichlorosilane and such highly pure hydrogen makes it possible to obtain highly pure polycrystalline silicon having a purity of not less than 11 N.

(Control of electric current)

As illustrated in Fig. 1, the power source 20 is connected to the control device 21 and the input part 22. In Embodiment 1, the control device 21 which has received via the input part 22 an input by a user of a value of an electric current to be passed through a silicon core wire controls a value of an electric current of the power source 20 that is provided for each of the concentric circles. Specifically, as illustrated in Fig. 2, an electric current for the circle A is supplied from the power source 20A, an electric current for the circle B is supplied from the power source 20B, and an electric current for the circle C is supplied from the power source 20C. The power sources 20A to 20C are each individually controlled by the control device 21.

In Embodiment 1, the control device 21 controls the power sources 20A to 20C so that an electric current to be passed through a silicon core wire arranged on a first concentric circle of the plurality of concentric circles has a greater value than an electric current to be passed through a silicon core wire arranged on a second concentric circle of the plurality of concentric circles, the second concentric circle being located inward of the first concentric circle.

In order to determine at what ratio to apply the electric currents to the respective concentric circles, the inventor found a method of determining, in accordance with a radiation heat quantity ratio for each of the circles, an electric current ratio at which to pass an electric current through polycrystalline silicon rods 13 of each of the circles. The radiation heat quantity ratio is obtained by deriving, for each of the circles by a simple method, an amount of heat radiation of the polycrystalline silicon rods 13 arranged on the plurality of concentric circles.

Specifically, first, determined are (i) a number n of the concentric circles, (ii) a total number M of columnar parts that extend vertically and that form the silicon core wires arranged on each of the concentric circles, and (iii) a diameter R of the polycrystalline silicon rods 13 at a time point during a process in which polycrystalline silicon is grown (hereinafter simply referred to as a "growth process"). The inventor found that it is possible to derive respective radiation heat quantities of the circles by determining the above (i) to (iii) and that it is possible to determine, in accordance with the obtained radiation heat quantity ratio for each of the circles, an electric current value ratio at which to pass an electric current through the polycrystalline silicon rods 13 of each of the circles. How to find the electric current value ratio will be described below in detail.

(How to find electric current value ratio)

The following description will discuss the reactor 1 in which the number of the concentric circles is n. First, the following description will discuss the silicon core wires 7 (or the polycrystalline silicon rods 13 formed by deposition on the silicon core wires 7) (parts extending vertically and serving as the columnar parts) arranged on a k-th concentric circle from the innermost circle.

A heat blocking ratio $S_k$ that is a ratio at which radiation heat of the silicon core wires 7 arranged on the k-th concentric circle is blocked by the silicon core wires 7 arranged on the other concentric circles and the k-th concentric circle is expressed by the following Equation (2):

$$S_k = R \times M_k / (2 \times r_k \times \pi) \qquad (2)$$

where R is the diameter of the polycrystalline silicon rods 13 at a time point during the growth process. Assuming that $R_{max}$ represents the diameter of the polycrystalline silicon rods 13 at the end of the deposition, R is preferably set to approximately 50% to 65% of $R_{max}$. For example, in a case where the diameter of the polycrystalline silicon rods 13 at the end of the deposition is 150 mm, R is set to 80 mm to 130, preferably 90 mm to 110 mm, and more preferably 95 mm to 105 mm. $M_k$ is the total number of columnar parts 71 and 72 extending in the vertical direction of the silicon core wires 7 arranged on the k-th (k being an integer that satisfies $1 \leq k \leq n$) concentric circle. For example, in a case where 3 pairs of electrodes 6 are arranged on a concentric circle, the total number of columnar parts 71 and 72 of the silicon core wires 7 arranged on the concentric circle is 6. $r_k$ is a radius of the k-th concentric circle, and $r_k$ preferably satisfies $r_k + (4/3) \times R_{max} \leq r_{k+1}$. This is because, in a case where $r_{k+1}$ is smaller than $r_k + (4/3) \times R_{max}$, a distance between adjacent polycrystalline silicon rods 13 is less than one third of $R_{max}$ at the end of the deposition and it is difficult to take out the rods after the end of the deposition.

Next, regarding the silicon core wires 7 arranged on the k-th concentric circle, the following description will discuss a radiation heat ratio $H_{ko}$ of heat radiated to outside the concentric circle. The silicon core wires 7 arranged on the k-th concentric circle are heat-blocked at a heat blocking ratio $S_{k+1}$ by the polycrystalline silicon rods 13 of a (k+1)-th concentric circle. Subsequently, the silicon core wires 7 arranged on the k-th concentric circle are heat-blocked at a heat blocking ratio $S_{k+2}$ by the polycrystalline silicon rods 13 of a (k+2)-th concentric circle. Thereafter, the silicon core wires 7 arranged on the k-th concentric circle are heat-blocked similarly and then are finally heat-blocked at a heat blocking ratio $S_n$ by the polycrystalline silicon rods 13 arranged on an n-th concentric circle that is the outermost circle. Thus, in a case where

$1 \leq k \leq n-1$, the radiation heat ratio $H_{ko}$ is expressed by Equation (3) below in heat radiation to outside the k-th concentric circle from the silicon core wires 7 arranged on the k-th concentric circle. The radiation heat ratio $H_{ko}$ is a ratio of (a) a quantity of radiation heat arriving at the inner wall 51 without being blocked by the silicon core wires 7 arranged on the other concentric circles to (b) a quantity of all the radiation heat arriving at the inner wall 51 without presence of any heat-blocking object.

$$H_{ko} = (1-S_{k+1}) \times (1-S_{k+2}) \times \cdots \times (1-S_n) \qquad (3)$$

Similarly, regarding the silicon core wires 7 arranged on the k-th concentric circle, the following description will discuss a radiation heat ratio $H_{ki}$ of heat radiated to the inner wall 51 through a center of the k-th concentric circle. The silicon core wires 7 arranged on the k-th concentric circle are heat-blocked at a heat blocking ratio $S_{k-1}$ by the polycrystalline silicon rods 13 of a (k-1)-th concentric circle. Subsequently, the silicon core wires 7 arranged on the k-th concentric circle are heat-blocked by the polycrystalline silicon rods 13 of (k-2)-th, (k-3)-th, ... , second, first, the first, the second, ... , the k-th, ... , and the n-th concentric circles. Thus, the radiation heat ratio $H_{ki}$ is expressed by Equation (4) below in heat radiation from the silicon core wires 7 arranged on the k-th concentric circle to the inner wall 51 through the center of the k-th concentric circle. The radiation heat ratio $H_{ki}$ is a ratio of (a) the quantity of radiation heat arriving at the inner wall 51 without being blocked by the silicon core wires 7 arranged on the other concentric circles and the k-th concentric circle to (b) the quantity of all the radiation heat arriving at the inner wall 51 without presence of any heat-blocking object.

$$H_{ki}=\{(1-S_1)\times\cdots\times(1-S_{k-1})\}^2\times(1-S_k)\times(1-S_{k+1})\times\cdots\times(1-S_n) \qquad (4)$$

Note here that, as publicly known, a quantity Q of heat that an object having an absolute temperature Ts, a surface area $A_2$, and an emissivity $\varepsilon_2$ releases, by heat emission, to a surrounding wall surface (having a surface area $A_1$, an emissivity $\varepsilon_1$, and a temperature Ta) is expressed by Equation (5) below.

$$Q = \sigma \varepsilon_2 A_2 \times (Ts^4 - Ta^4) \qquad (5)$$

From Equation (5) above, a total radiation heat quantity $Q_k$ of the silicon core wires 7 arranged on the k-th concentric circle can be said to be proportional to a surface area $A_k$ of the polycrystalline silicon rods 13 and a total radiation heat ratio $H_k$, and the total radiation heat quantity $Q_k$ can be expressed by Equation (6) below.

$$Q_k = \beta \times H_k \times A_k \qquad (6)$$

where the total radiation heat ratio $H_k$ is a ratio of (ii) below to (i) below measured in heat radiation to the inner wall 51 from the silicon core wires 7 arranged on the k-th concentric circle.

(i) the quantity of all the radiation heat arriving at the inner wall 51 without presence of any heat-blocking object
(ii) the quantity of radiation heat arriving at the inner wall 51 without being blocked by the silicon core wires 7 arranged on the other concentric circles and the k-th concentric circle

Furthermore, the total radiation heat quantity $Q_k$, which is a sum of a quantity $Q_{ko}$ of heat radiated to outside a concentric circle and a quantity $Q_{ki}$ of heat radiated to a center of the concentric circle, can therefore be expressed by Equation (7) below.

$$Q_k = Q_{ko} + Q_{ki} = (\beta \times H_{ko} \times A_{ko}) + (\beta \times H_{ki} \times A_{ki}) \qquad (7)$$

In a case where $A_k$ is divided into $A_{ko}$ in the outward direction of the concentric circle and $A_{ki}$ in the central direction of the concentric circle, $A_k = A_{ko} + A_{ki}$, and, assuming that $A_{ko} = A_{ki} = (1/2) \times A_k$, $Q_k$ is expressed by Equation (8) below.

$$Q_k=\{\beta\times H_{ko}\times(1/2)\times A_k\}+\{\beta\times H_{ki}\times(1/2)\times A_k\}= \beta\times(1/2)\times A_k\times(H_{ko}+H_{ki}) \qquad (8)$$

This makes it possible to say that $H_k = (1/2)\times H_{ki} + (1/2)\times H_{ko}$.
The total radiation heat ratio $H_k$ of heat radiated to the inner wall 51 from the silicon core wires 7 arranged on the k-th concentric circle is therefore expressed by Equation (9) below.

$$H_k=(1/2)\times H_{ki}+(1/2)H_{ko}=(1/2)\times[(1-S_{k+1})\times\cdots\times(1-S_n)+\{(1-S_1)\times\cdots\times(1-S_{k-1})\}^2\times(1-S_k)\times(1-S_{k+1})\times\cdots\times(1-S_n)] \qquad (9)$$

Next, regarding the silicon core wires 7 arranged on the outermost concentric circle (the n-th concentric circle), the heat blocking ratio $S_n$ is expressed by Equation (10) below as in the case of Equation (2) above. The heat blocking ratio $S_n$ is a ratio at which radiation heat of the silicon core wires 7 arranged on the n-th concentric circle is blocked by the silicon core wires 7 arranged on the other concentric circles and the n-th concentric circle.

$$S_n = R \times M_n / (2 \times r_n \times \pi) \qquad (10)$$

The following description will discuss a radiation heat ratio $H_{no}$ measured in heat radiation to outside the concentric circle from the silicon core wires 7 arranged on the n-th concentric circle. The radiation heat ratio $H_{no}$ is a ratio of (a) the quantity of radiation heat arriving at the inner wall 51 without being blocked by the silicon core wires 7 arranged on the other concentric circles to (b) the quantity of all the radiation heat arriving at the inner wall 51 without presence of any heat-blocking object. Since the n-th concentric circle is the outermost circle, radiation heat is not blocked by the polycrystalline silicon rods 13 of the other circles, and $H_{no}$ = 1.0.

A radiation heat ratio $H_{ni}$ measured in heat radiation to the inner wall 51 through a center of the n-th concentric circle from the silicon core wires 7 arranged on the n-th concentric circle is expressed by Equation (11) below as in the case of Equation (4) above. The radiation heat ratio $H_{ni}$ is a ratio of (a) a quantity of radiation heat arriving at the inner wall 51 without being blocked by the silicon core wires 7 arranged on the other concentric circles and the n-th concentric circle to (b) the quantity of all the radiation heat arriving at the inner wall 51 without presence of any heat-blocking object.

$$H_{ni} = \{ (1-S_1) \times \cdots \times (1-S_{n-1}) \}^2 \times (1-S_n) \qquad (11)$$

Thus, a total radiation heat ratio $H_n$ measured in heat radiation to the inner wall 51 from the silicon core wires 7 arranged on the n-th concentric circle is expressed by Equation (12) below as in the case of Equation (9) above. The total radiation heat ratio $H_n$ is a ratio of (a) the quantity of radiation heat arriving at the inner wall 51 without being blocked by the silicon core wires 7 arranged on the other concentric circles and the n-th concentric circle to (b) the quantity of all the radiation heat arriving at the inner wall 51 without presence of any heat-blocking object.

$$H_n=(1/2)\times H_{ni}+(1/2)\times H_{no}=(1/2)\times\{1+\{(1-S_1)\times\cdots\times(1-S_{n-1})\}^2\times(1-S_n) \qquad (12)$$

Assuming that $Q_k$ represents a total radiation heat quantity of heat radiated to the inner wall 51 from the silicon core wires 7 arranged on the k-th concentric circle, the total radiation heat ratio $H_k$ of the silicon core wires 7 arranged on the k-th concentric circle is proportional to the total radiation heat quantity $Q_k$. In a case where compensation for heat loss caused by the total radiation heat quantity $Q_k$ is regulated by a value $I_k$ of an electric current to be supplied to the silicon core wires 7 arranged on the k-th concentric circle, $I_k$ depends on $H_k$ and $Q_k$.

However, a heat supply by an electric current supply is used also to heat raw material gas. Furthermore, though the rods are substantially identical in quantity of heat used to heat gas, heat supplied by the electric current supply is used, at a complicated ratio, to compensate for heat loss caused by heat radiation. In view of this, the inventor empirically found a supplement to the total radiation heat quantity $Q_k$ by heat radiation by actually carrying out a deposition reaction regulated by the value $I_k$ of the electric current. As a result, the inventor found that application of an electric current under a condition satisfying Equation (13) below allows the formed polycrystalline silicon rods 13 to have substantially the same diameter.

$$I_k = I_n \times (Q_k / Q_n)^\alpha \qquad (0 < \alpha \leqq 0.3) \qquad (13)$$

Specifically, Equation (13) above can be used to determine, as a linear function of a value of an electric current to be passed through the polycrystalline silicon rods 13 of the outermost concentric circle, a value of an electric current to be passed through the polycrystalline silicon rods 13 of each of the concentric circles. Thus, $I_k$ that corresponds to a specific $I_n$ can be found by finding a ratio $(Q_k/Q_n)$ between the total radiation heat quantity $Q_k$ and a total radiation heat quantity $Q_n$. The total radiation heat ratio $H_k$ of the silicon core wires 7 arranged on the k-th concentric circle is proportional to the total radiation heat quantity $Q_k$, and the total radiation heat ratio $H_n$ of the silicon core wires 7 arranged on the n-th concentric circle is proportional to the total radiation heat quantity $Q_n$. In view of this, the ratio between the total radiation heat quantity $Q_k$ and the total radiation heat quantity $Q_n$ is expressed by Equation (14) below.

$$Q_k / Q_n = H_k / H_n \qquad (14)$$

$H_k$ in Equation (14) above can be substituted by Equation (9), and $H_n$ in Equation (14) above can be substituted by Equation (12). The heat blocking ratio $S_k$ in the equations by which $H_k$ and $H_n$ are thus substituted can be found by Equation (2), and the heat blocking ratio $S_n$ in those equations by which $H_k$ and $H_n$ are thus substituted can be found by Equation (10). In this manner, $Q_k / Q_n$ can be found. In other words, a value ($I_k$) of an electric current to be applied to the silicon core wires 7 on the k-th concentric circle, the value corresponding to a specific value ($I_n$) of an electric current to be applied to the silicon core wires 7 located outermost, can be derived from (i) the diameter (R) of the polycrystalline silicon rods 13 at a time point during the growth process, (ii) radii ($r_k$ and $r_n$) of concentric circles, and (iii) total numbers ($M_k$ and $M_n$) of the columnar parts of the silicon core wires 7 arranged on the concentric circles.

(Effects of invention)

According to an aspect of the present invention, a variation in thickness of the polycrystalline silicon rods to be formed in one batch in the reactor 1 can be reduced by passing the electric currents at the electric current ratio determined by the method (described earlier). This makes it possible to obtain the polycrystalline silicon rods 13 having a uniform thickness. A variation in thickness of resultant polycrystalline silicon rods 13 leads to a reduction in production of the polycrystalline silicon rods 13 in one batch. Furthermore, non-uniformity in thickness of the polycrystalline silicon rods 13 formed requires non-routine work such as regulation of a lift-up force applied to detach the polycrystalline silicon rods 13 from the bottom plate and/or regulation of a force during a rough-crushing step carried out before the formed rods are subjected to a crushing step. This reduces work efficiency. By obtaining the polycrystalline silicon rods 13 having a more uniform thickness, an aspect of the present invention makes it possible to (i) solve such problems as described above and (ii) improve productivity.

Results of tests that demonstrated the effects of the present invention will be described below.

(Demonstration test result 1)

The reactor 1 was used which included (i) 4 silicon core wires 7 arranged on a circumference of a concentric circle A having a radius $r_A$ of 300 mm, (ii) 8 silicon core wires 7 arranged on a circumference of a concentric circle B having a radius $r_B$ of 600 mm, and (iii) 16 silicon core wires 7 arranged on a circumference of a concentric circle C having a radius $r_C$ of 900 mm, and the total radiation heat ratio $H_k$ of each of the circles measured when R = 100 (mm) was calculated based on the equation expressing the heat blocking ratio $S_k$. Table 1 shows a result of the calculation.

[Table 1]

| | |
|---|---|
| Total heat radiation ratio of rods of circle A | 0.505 |
| Total heat radiation ratio of rods of circle B | 0.534 |
| Total heat radiation ratio of rods of circle C | 0.638 |

In accordance with the result shown in Table 1, the value of the electric current to be passed through the silicon core wires 7 of each of the circles was calculated based on Equation (13) above. Table 2 shows a result of the calculation. In Table 2, IA/IC represents the ratio of the value of the electric current for the circle A to the value of the electric current for the circle C.

[Table 2]

| | $(Q_k/Q_n)^\alpha$ | | | | | | |
|---|---|---|---|---|---|---|---|
| | $\alpha=0.1$ | $\alpha=0.15$ | $\alpha=0.18$ | $\alpha=0.2$ | $\alpha=0.22$ | $\alpha=0.25$ | $\alpha=0.3$ |
| IA/IC | 0.98 | 0.97 | 0.96 | 0.95 | 0.95 | 0.94 | 0.93 |
| IB/IC | 0.98 | 0.97 | 0.97 | 0.96 | 0.96 | 0.96 | 0.95 |
| IC/IC | 1.00 | 1.00 | 1.00 | 1.00 | 1.00 | 1.00 | 1.00 |

Table 3 shows a variation in diameter of the resultant polycrystalline silicon rods 13 in a case where the electric currents were applied to the circle A, the circle B, and the circle C at the electric current ratios obtained from the calculation result shown in Table 2.

For example, in a case where α was 0.3, control was carried out so that (i) the value of the electric current to be applied to the silicon core wires 7 of the circle A was 93% of the value of the electric current for the circle C and (ii) the value of the electric current to be applied to the silicon core wires 7 of the circle B was 95% of the value of the electric current for the circle C, and deposition was conducted until the polycrystalline silicon rods 13 of the circle C each had a diameter of 150 mm. In this case, among all the polycrystalline silicon rods 13 obtained in the reactor 1, a value (variation) of 8% was observed, the value being obtained by dividing a difference between a maximum value and a minimum value of the rod diameter by the maximum value.

[Table 3]

| IA/IC | 0.98 | 0.97 | 0.96 | 0.95 | 0.95 | 0.94 | 0.93 |
|---|---|---|---|---|---|---|---|
| IB/IC | 0.98 | 0.97 | 0.97 | 0.96 | 0.96 | 0.96 | 0.95 |
| IC/IC | 1.00 | 1.00 | 1.00 | 1.00 | 1.00 | 1.00 | 1.00 |
| Variation | 8% | 7% | 3% | 2% | 3% | 6% | 8% |

The above result shows that it was possible to obtain 28 polycrystalline silicon rods 13 having a variation of less than 10% at any value in the range of $0 < \alpha \leq 0.3$.

(Demonstration test result 2)

The reactor 1 was used which included (i) 4 silicon core wires 7 arranged on a circumference of a concentric circle A having a radius $r_A$ of 400 mm, (ii) 8 silicon core wires 7 arranged on a circumference of a concentric circle B having a radius $r_B$ of 800 mm, (iii) 16 silicon core wires 7 arranged on a circumference of a concentric circle C having a radius $r_C$ of 1200 mm, (iv) 32 silicon core wires 7 arranged on a circumference of a concentric circle D having a radius $r_D$ of 1600 mm, and (v) 48 silicon core wires 7 arranged on a circumference of a concentric circle E having a radius $r_E$ of 2000 mm, and the total radiation heat ratio $H_k$ of each of the circles measured when R = 100 (mm) was calculated based on the equation expressing the heat blocking ratio $S_k$. Table 4 shows a result of the calculation.

[Table 4]

| Total heat radiation ratio of rods of circle A | 0.257 |
|---|---|
| Total heat radiation ratio of rods of circle B | 0.265 |
| Total heat radiation ratio of rods of circle C | 0.294 |
| Total heat radiation ratio of rods of circle D | 0.374 |
| Total heat radiation ratio of rods of circle E | 0.545 |

In accordance with the result shown in Table 4, the value of the electric current to be passed through the silicon core wires 7 of each of the circles was calculated based on Equation (13) above. Table 5 shows a result of the calculation.

[Table 5]

| | $(Q_k/Q_n)^\alpha$ | | | | | | |
|---|---|---|---|---|---|---|---|
| | α=0.1 | α=0.15 | α=0.18 | α=0.2 | α=0.22 | α=0.25 | α=0.3 |
| IA/IE | 0.93 | 0.89 | 0.87 | 0.86 | 0.85 | 0.83 | 0.80 |
| IB/IE | 0.93 | 0.90 | 0.88 | 0.87 | 0.85 | 0.83 | 0.81 |
| IC/IE | 0.94 | 0.91 | 0.89 | 0.88 | 0.87 | 0.86 | 0.83 |
| ID/IE | 0.96 | 0.95 | 0.93 | 0.93 | 0.92 | 0,91 | 0.89 |
| IE/IE | 1.00 | 1.00 | 1.00 | 1.00 | 1.00 | 1.00 | 1.00 |

Table 6 shows a variation in diameter of the resultant polycrystalline silicon rods 13 in a case where the electric currents were applied to the circle A, the circle B, the circle C, the circle D, and the circle E at the electric current ratios obtained from the calculation result shown in Table 5.

For example, in a case where α was 0.3, control was carried out so that (i) the value of the electric current to be applied to the silicon core wires 7 of the circle A was 80% of the value of the electric current for the circle E, (ii) the value of the electric current to be applied to the silicon core wires 7 of the circle B was 81% of the value of the electric current for the circle E, (iii) the value of the electric current to be applied to the silicon core wires 7 of the circle C was 83% of the value of the electric current for o the circle E, and (iv) the value of the electric current to be applied to the silicon core wires 7 of the circle D was 89% of the value of the electric current for the circle E, and deposition was conducted until the polycrystalline silicon rods 13 of the circle E each had a diameter of 150 mm. In this case, among all the polycrystalline silicon rods 13 obtained in the reactor 1, a value (variation) of 8% was observed, the value being obtained by dividing a difference between a maximum value and a minimum value of the rod diameter by the maximum value.

[Table 6]

| IA/IE | 0.93 | 0.89 | 0.87 | 0.86 | 0.85 | 0.83 | 0.80 |
| --- | --- | --- | --- | --- | --- | --- | --- |
| IB/IE | 0.93 | 0.90 | 0.88 | 0.87 | 0.85 | 0.83 | 0.81 |
| IC/IE | 0.94 | 0.91 | 0.89 | 0.88 | 0.87 | 0.86 | 0.83 |
| ID/IE | 0.96 | 0.95 | 0.93 | 0.93 | 0.92 | 0.91 | 0.89 |
| IE/IE | 1.00 | 1.00 | 1.00 | 1.00 | 1.00 | 1.00 | 1.00 |
| Variation | 9% | 7% | 3% | 2% | 3% | 6% | 8% |

The above result shows that it was possible to obtain 108 polycrystalline silicon rods 13 having a variation of less than 10% at any value in the range of $0 < \alpha \leq 0.3$.

(Comparative Example)

As a comparative example the reactor 1 was used which included (i) 4 silicon core wires 7 arranged on a circumference of a concentric circle A having a radius $r_A$ of 300 mm, (ii) 8 silicon core wires 7 arranged on a circumference of a concentric circle B having a radius $r_B$ of 600 mm, and (iii) 16 silicon core wires 7 arranged on a circumference of a concentric circle C having a radius $r_C$ of 900 mm, and the same electric current was applied to each of the circles. Deposition was conducted until the polycrystalline silicon rods 13 of the circle C each had a diameter of 150 mm. In this case, among all the polycrystalline silicon rods 13 obtained in the reactor 1, a value (variation) of 13% was observed, the value being obtained by dividing a difference between a maximum value and a minimum value of the rod diameter by the maximum value.

(Embodiment 2)

Regarding the value of R, Embodiment 1 uses a predetermined constant as the diameter of the polycrystalline silicon rods 13 at a time point during the growth process to derive the electric current value ratio between $I_n$ and $I_k$. The electric current value ratio that is constant throughout the production process is used to produce the polycrystalline silicon rods 13.

However, in an actual production process, the diameter of the polycrystalline silicon rods 13 changes over time in accordance with their growth. Thus, a process for producing the polycrystalline silicon rods 13 can be divided into a plurality of steps, and the electric current value ratio to be used in each of the steps can also be individually calculated. In this case, the control device 21 controls the electric current values of the power sources 20A to 20C so as to achieve the electric current value ratio that is determined in advance for each of the plurality of steps. This configuration makes it possible to obtain the polycrystalline silicon rods 13 having a smaller variation in thickness.

Reference Signs List

1    Reactor
2    Reaction chamber
3    Bottom plate
5    Bell jar
6    Electrode
7    Silicon core wire

13     Polycrystalline silicon rod
20     Power source
21     Control device
22     Input part
51     Inner wall

**Claims**

1.  A method for producing a polycrystalline silicon rod (13), the method involving growing polycrystalline silicon by passing electric currents through silicon core wires (7) in a bell jar (5) in which the silicon core wires (7) are arranged on a plurality of concentric circles, wherein

    - values of the electric currents to be passed through the silicon core wires (7) are controlled so that an electric current to be passed through a silicon core wire (7) arranged on a first concentric circle of the plurality of concentric circles has a greater value than an electric current to be passed through a silicon core wire (7) arranged on a second concentric circle of the plurality of concentric circles, the second concentric circle being located inward of the first concentric circle, and
    - an electric current to be passed through a silicon core wire (7) arranged on a k-th concentric circle from an innermost concentric circle of the plurality of concentric circles is controlled so as to satisfy the following equation:

    -

    $$I_k = I_n \times (Q_k/Q_n)^{\alpha} \ (0 < \alpha \le 0.3)$$

    - where n is an integer that represents the number of the concentric circles in the bell jar (5) and that is greater than 1,
    - k is an integer that satisfies $1 \le k < n$,
    - $I_n$ is an electric current to be passed through a silicon core wire (7) arranged on an outermost concentric circle of the plurality of concentric circles,
    - $Q_n$ is a total radiation heat quantity of heat radiated to an inner wall (51) of the bell jar (5) from the silicon core wire (7) arranged on the outermost concentric circle, and
    - $Q_k$ is a total radiation heat quantity of heat radiated to the inner wall (51) from the silicon core wire (7) arranged on the k-th concentric circle
    - $Q_k$ being calculated by the following equation:

    -

    -     $Q_k = H_k = (1/2) \times H_{ki} + (1/2) \times H_{ko} = (1/2) \times [(1-S_k+1) \times ... \times (1-S_n) + \{(1-S_1) \times ... \times (1-S_{k-1})\} 2 \times (1-S_k) \times (1-S_{k+1}) \times ... \times (1-S_n)]$

    - where $S_k$ is a heat blocking ratio that is a ratio at which the silicon core wire (7) arranged on the k-th concentric circle blocks radiation heat of the silicon core wire (7) arranged on the k-th concentric circle and of a silicon core wire (7) arranged on another concentric circle different from the k-th concentric circle, and is calculated from the following equation:

    -

    $$S_k = R \times M_k / (2 \times r_k \times \pi),$$

    - $H_{ko}$ is a radiation heat ratio of heat radiated from the k-th concentric circle to outside the k-th concentric circle, and is calculated from the following equation:

    -

    $$H_{ko} = (1-S_{k+1}) \times ... \times (1-S_n),$$

and

- $H_{ki}$ is a radiation heat ratio of heat radiated from the k-th concentric circle to the inner wall (51) through a center of the k-th concentric circle, and is calculated from the following equation:

-

$$H_{ki} = \{(1-S_1) \times \ldots \times (1-S_{k-1})\}2 \times (1-S_k) \times (1-S_{k+1}) \times \ldots \times (1-S_n),$$

- $Q_n$ being calculated by the following equation:

-

$$Q_n = H_n = (1/2) \times H_{ni} + (1/2) \times H_{no} = (1/2) \times \{1 + \{(1-S_1) \times \ldots \times (1-S_{n-1})\}2 \times (1-S_n)$$

- where $S_n$ is a heat blocking ratio that is a ratio at which the silicon core wire (7) arranged on the outermost concentric circle blocks radiation heat of the silicon core wire (7) arranged on the outermost concentric circle and of a silicon core wire (7) arranged on another concentric circle different from the outermost concentric circle, and is calculated from the following equation:

-

$$S_n = (R \times M_n) / (2 \times r_n \times \pi),$$

- $H_{no}$ is a radiation heat ratio of heat radiated from the outermost concentric circle to outside the outermost concentric circle, and is equal to 1, and
- $H_{ni}$ is a radiation heat ratio of heat radiated from the outermost concentric circle to the inner wall (51) through a center of the outermost concentric circle, and is calculated from the foregoing equation:

-

$$H_{ni} = \{(1-S_1) \times \ldots \times (1-S_{n-1})\}2 \times (1-S_n),$$

- where R is a diameter of the polycrystalline silicon rod (13) at a time point during a process in which the polycrystalline silicon is grown,
- $r_x$ is a radius of an x-th (x being an integer that satisfies $1 \leq x \leq n$) concentric circle from the innermost concentric circle, and
- $M_y$ is the total number of silicon core wires (7) arranged on a y-th (y being an integer that satisfies $1 \leq y \leq n$) concentric circle from the innermost concentric circle.

**Patentansprüche**

1. Verfahren zur Herstellung eines polykristallinen Siliziumstabs (13), wobei das Verfahren das Züchten von polykristallinem Silizium durch Leiten von elektrischen Strömen durch Siliziumkerndrähte (7) in einem Glockengefäß (5) umfasst, in dem die Siliziumkerndrähte (7) auf einer Mehrzahl von konzentrischen Kreisen angeordnet sind, wobei

- Werte der elektrischen Ströme, die durch die Siliziumkerndrähte (7) geleitet werden sollen, so gesteuert werden, dass ein elektrischer Strom, der durch einen Siliziumkerndraht (7) geleitet werden soll, der auf einem ersten konzentrischen Kreis der Mehrzahl von konzentrischen Kreisen angeordnet ist, einen größeren Wert aufweist als ein elektrischer Strom, der durch einen Siliziumkerndraht (7) geleitet werden soll, der auf einem zweiten konzentrischen Kreis der Mehrzahl von konzentrischen Kreisen angeordnet ist, wobei der zweite konzentrische Kreis innerhalb des ersten konzentrischen Kreises angeordnet ist, und
- ein elektrischer Strom, der durch einen Siliziumkerndraht (7) geleitet werden soll, der auf einem k-ten konzentrischen Kreis von einem innersten konzentrischen Kreis der Mehrzahl von konzentrischen Kreisen angeordnet ist, so gesteuert wird, dass er die folgende Gleichung erfüllt:

-

$$I_k = I_n \times (Q_k/Q_n)^\alpha \ (0 < \alpha \le 0{,}3)$$

- wobei n eine ganze Zahl ist, die die Anzahl der konzentrischen Kreise in dem Glockengefäß (5) darstellt und die größer als 1 ist,
- k eine ganze Zahl ist, die $1 \le k < n$ erfüllt,
- $I_n$ ein elektrischer Strom ist, der durch einen Siliziumkerndraht (7) geleitet werden soll, der auf einem äußersten konzentrischen Kreis der Mehrzahl von konzentrischen Kreisen angeordnet ist,
- $Q_n$ eine Gesamtstrahlungswärmemenge von Wärme ist, die von dem Siliziumkerndraht (7), der auf dem äußersten konzentrischen Kreis angeordnet ist, auf eine Innenwand (51) des Glockengefäßes (5) abgestrahlt wird, und
- $Q_k$ eine Gesamtstrahlungswärmemenge von Wärme ist, die von dem Siliziumkerndraht (7), der auf dem k-ten konzentrischen Kreis angeordnet ist, auf die Innenwand (51) abgestrahlt wird,
- wobei $Q_k$ durch die folgende Gleichung berechnet wird:

-

-      $Q_k = H_k = (1/2) \times H_{ki} + (1/2) \times H_{ko} = (1/2) \times [(1-S_k+1) \times ... \times (1-S_n) + \{(1-S_1) \times ... \times (1-S_{k-1})\}$ $2 \times (1-S_k) \times (1-S_{k+1}) \times ... \times (1-S_n)]$

- wobei $S_k$ ein Wärmesperrverhältnis ist, das ein Verhältnis ist, bei dem der Siliziumkerndraht (7), der auf dem k-ten konzentrischen Kreis angeordnet ist, Strahlungswärme des Siliziumkerndrahts (7), der auf dem k-ten konzentrischen Kreis angeordnet ist, und eines Siliziumkerndrahts (7), der auf einem anderen konzentrischen Kreis angeordnet ist, der sich von dem k-ten konzentrischen Kreis unterscheidet, sperrt, und aus der folgenden Gleichung berechnet wird:

-

$$S_k = R \times M_k \ / \ (2 \times r_k \times \pi),$$

- $H_{ko}$ ein Strahlungswärmeverhältnis von Wärme ist, die von dem k-ten konzentrischen Kreis nach außerhalb des k-ten konzentrischen Kreises abgestrahlt wird, und aus der folgenden Gleichung berechnet wird:

-

$$H_{ko} = (1-S_{k+1}) \times ... \times (1-S_n), \text{ und}$$

- $H_{ki}$ ein Strahlungswärmeverhältnis von Wärme ist, die von dem k-ten konzentrischen Kreis durch eine Mitte des k-ten konzentrischen Kreises auf die Innenwand (51) abgestrahlt wird, und aus der folgenden Gleichung berechnet wird:

-

$$H_{ki} = \{(1-S_1) \times ... \times (1-S_{k-1})\}2 \times (1-S_k) \times (1-S_{k+1}) \times ... \times (1-S_n),$$

- wobei $Q_n$ durch die folgende Gleichung berechnet wird:

-

$$Q_n = H_n = (1/2) \times H_{ni} + (1/2) \times H_{no} = (1/2) \times \{1 + \{(1-S_1) \times ... \times (1-S_{n-1})\}2 \times (1-S_n)$$

- wobei $S_n$ ein Wärmesperrverhältnis ist, das ein Verhältnis ist, bei dem der Siliziumkerndraht (7), der auf dem äußersten konzentrischen Kreis angeordnet ist, Strahlungswärme des Siliziumkerndrahts (7), der auf dem äußersten konzentrischen Kreis angeordnet ist, und eines Siliziumkerndrahts (7), der auf einem anderen konzentrischen Kreis angeordnet ist, der sich von dem äußersten konzentrischen Kreis unterscheidet, sperrt, und aus der folgenden Gleichung berechnet wird:

-

$$S_n = (R \times M_n) / (2 \times r_n \times \pi),$$

- $H_{no}$ ein Strahlungswärmeverhältnis von Wärme ist, die von dem äußersten konzentrischen Kreis nach außerhalb des äußersten konzentrischen Kreises abgestrahlt wird, und gleich 1 ist, und
- $H_{ni}$ ein Strahlungswärmeverhältnis von Wärme ist, die von dem äußersten konzentrischen Kreis durch eine Mitte des äußersten konzentrischen Kreises auf die Innenwand (51) abgestrahlt wird, und aus der vorstehenden Gleichung berechnet wird:

-

$$H_{ni} = \{(1-S_1) \times ... \times (1-S_{n-1})\}2 \times (1-S_n),$$

- wobei R ein Durchmesser des polykristallinen Siliziumstabs (13) zu einem Zeitpunkt während eines Prozesses ist, in dem das polykristalline Silizium gezüchtet wird,
- $r_x$ ein Radius eines x-ten (wobei x eine ganze Zahl ist, die $1 \leq x \leq n$ erfüllt) konzentrischen Kreises von dem innersten konzentrischen Kreis ist, und
- $M_y$ die Gesamtanzahl von Siliziumkerndrähten (7) ist, die auf einem y-ten (wobei y eine ganze Zahl ist, die $1 \leq y \leq n$ erfüllt) konzentrischen Kreis von dem innersten konzentrischen Kreis angeordnet sind.

## Revendications

**1.** Procédé de fabrication d'une tige de silicium polycristallin (13), le procédé consistant à faire croître du silicium polycristallin en faisant passer des courants électriques à travers des fils à âme en silicium (7) placés dans une cloche à vide (5) au sein de laquelle les fils à âme en silicium (7) sont disposés sur une pluralité de cercles concentriques, dans lequel

- les valeurs des courants électriques devant être fait passer à travers les fils à âme en silicium (7) sont contrôlées de telle sorte qu'un courant électrique devant être fait passer à travers un fil à âme en silicium (7) disposé sur un premier cercle concentrique parmi la pluralité de cercles concentriques ait une valeur supérieure à celle d'un courant électrique devant être fait passer à travers un fil à âme en silicium (7) disposé sur un deuxième cercle concentrique parmi la pluralité de cercles concentriques, le deuxième cercle concentrique étant situé à l'intérieur du premier cercle concentrique, et
- un courant électrique devant être fait passer à travers un fil à âme de silicium (7) disposé sur un k-ième cercle concentrique à partir d'un cercle concentrique le plus intérieur parmi la pluralité de cercles concentriques est contrôlé de manière à satisfaire l'équation suivante :

-

$$I_k = I_n \times (Q_k / Q_n)^\alpha \ (0 < \alpha \leq 0,3)$$

- où n représente un nombre entier qui représente le nombre de cercles concentriques dans la cloche à vide (5) et qui est supérieur à 1,
- k représente un nombre entier qui satisfait $1 \leq k < n$,
- $I_n$ représente un courant électrique devant être fait passer à travers un fil à âme en silicium (7) disposé sur un cercle concentrique le plus extérieur parmi la pluralité de cercles concentriques,
- $Q_n$ représente une quantité totale de chaleur de rayonnement émise vers une paroi interne (51) de la cloche à vide (5) à partir du fil à âme de silicium (7) disposé sur le cercle concentrique le plus extérieur, et
- $Q_k$ représente une quantité totale de chaleur de rayonnement émise vers la paroi interne (51) à partir du fil à âme de silicium (7) disposé sur le k-ième cercle concentrique
- $Q_k$ étant calculé selon l'équation suivante :

-

$$Q_k = H_k = (1/2) \times H_{ki} + (1/2) \times H_{ko} = (1/2) \times [(1 - S_k + 1) \times ... \times (1 - S_n) + \{(1 - S_1) \times ... \times (1 - S_{k-1})\} \, 2 \times (1 - S_k) \times (1 - S_{k+1}) \times ... \times (1 - S_n)]$$

- où $S_k$ représente un taux de blocage de chaleur qui représente un rapport auquel le fil à âme de silicium (7) disposé sur le k-ième cercle concentrique bloque la chaleur de rayonnement du fil à âme de silicium (7) disposé sur le k-ième cercle concentrique et d'un fil à âme de silicium (7) disposé sur un autre cercle concentrique différent du k-ième cercle concentrique, et est calculé à partir de l'équation suivante :

-

$$S_k = R \times M_k / (2 \times r_k \times \pi),$$

- $H_{ko}$ représente un rapport de chaleur de rayonnement de la chaleur rayonnée à partir du k-ième cercle concentrique vers l'extérieur du k-ième cercle concentrique, et est calculé à partir de l'équation suivante :

-

$$H_{ko} = (1 - S_{k+1}) \times ... \times (1 - S_n), \text{ et}$$

- $H_{ki}$ représente un rapport de chaleur de rayonnement de la chaleur rayonnée à partir du k-ième cercle concentrique vers la paroi interne (51) à travers un centre du k-ième cercle concentrique, et est calculé à partir de l'équation suivante :

-

$$H_{ki} = \{(1 - S_1) \times ... \times (1 - S_{k-1})\} \, 2 \times (1 - S_k) \times (1 - S_{k+1}) \times ... \times (1 - S_n),$$

- $Q_n$ étant calculé selon l'équation suivante :

-

$$Q_n = H_n = (1/2) \times H_{ni} + (1/2) \times H_{no} = (1/2) \times \{1 + \{(1 - S_1) \times ... \times (1 - S_{n-1})\} \, 2 \times (1 - S_n)$$

- où $S_n$ représente un taux de blocage de chaleur qui correspond à un rapport selon lequel le fil à âme de silicium (7) disposé sur le cercle concentrique le plus extérieur bloque la chaleur de rayonnement du fil à âme de silicium (7) disposé sur le cercle concentrique le plus extérieur et d'un fil à âme de silicium (7) disposé sur un autre cercle concentrique différent du cercle concentrique le plus extérieur, et est calculé à partir de l'équation suivante :

-

$$S_n = (R \times M_n) / (2 \times r_n \times \pi),$$

- $H_{no}$ représente un rapport de chaleur de rayonnement de la chaleur rayonnée à partir du cercle concentrique le plus extérieur vers l'extérieur du cercle concentrique le plus extérieur, et est égal à 1, et

- $H_{ni}$ représente un rapport de chaleur de rayonnement de la chaleur rayonnée à partir du cercle concentrique le plus extérieur vers la paroi interne (51) à travers un centre du cercle concentrique le plus extérieur, et est calculé à partir de l'équation suivante :

-

$$H_{ni} = \{(1 - S_1) \times ... \times (1 - S_{n-1})\}2 \times (1 - S_n),$$

- où R représente un diamètre de la tige de silicium polycristallin (13) à un instant donné au cours d'un processus de croissance du silicium polycristallin,

- $r_x$ représente un rayon d'un x-ième cercle concentrique (x étant un nombre entier qui satisfait $1 \leq x \leq n$) à partir du cercle concentrique le plus intérieur, et

- $M_y$ représente le nombre total de fils à âme en silicium (7) disposés sur un y-ième cercle concentrique (y étant un nombre entier qui satisfait $1 \leq y \leq n$) à partir du cercle concentrique le plus intérieur.

FIG. 1

RAW MATERIAL GAS

CONTROL DEVICE — INPUT PART

WASTE GAS

FIG. 2

**EP 3 998 230 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202358923
- CN 202358926
- US 20110014468 A1
- CN 101870471 A
- WO 2019110091 A1
- CN 102354336 A